# EUROPEAN PATENT SPECIFICATION

(11) **EP 3 178 361 B1**
(45) Date of publication and mention of the grant of the patent: **26.09.2018**
(21) Application number: 17151944.0
(22) Date of filing: 23.12.2014
(51) Int. Cl.: A47L 9/16

(54) **ROBOT CLEANER**
ROBOTERREINIGER
ROBOT NETTOYEUR

(30) Priority: 24.09.2014 KR 20140127838
(43) Date of publication of application: 14.06.2017
(62) Divisional of application: 14199943.3
(73) Proprietor: LG Electronics Inc., Yeongdeungpo-gu Seoul 07336 (KR)
(72) Inventor: KIM, Jongsu, Seoul 08592 (KR); KIM, Hwang, Seoul 08592 (KR); PARK, Sungil, Seoul 08592 (KR)
(74) Representative: Ter Meer Steinmeister & Partner

(56) References cited:
- EP-A1- 2 417 893
- EP-A2- 1 797 809
- WO-A1-2013/105431
- JP-A- H0 889 451

## Description

### BACKGROUND OF THE DISCLOSURE

### 1. Field of the Disclosure

This specification relates to a robot cleaner, and more particularly, to a robot cleaner having a novel structure and arrangement.

### 2. Background of the Disclosure

Generally, robots have been developed for an industrial use, and realized some parts of factory automation. As the robot is applied to various fields recently, not only medical robots and space robots, but also home robots are being developed.

A representative of the home robot is a robot cleaner, a kind of home electronic appliance capable of performing a cleaning operation by sucking dust on a floor (including foreign materials) while autonomously moving on a predetermined region.

An example of such a robot cleaner is disclosed in document EP 1 797 809 A2

Such robot cleaner is provided with a chargeable battery, and is provided with an obstacle sensor for avoiding an obstacle while moving.

Generally, a robot cleaner is designed to have a low height in a vertical direction, so as to clean even below furniture or a structure. Thus, a dust box of the robot cleaner has a smaller capacity than that of a general cleaner.

In such robot cleaner, the dust box of a small capacity is easily filled with dust by repetitive cleanings. This may cause a user's inconvenience to frequently empty the dust box. Furthermore, in some cases, a suction force may be lowered due to accumulated dust.

### SUMMARY OF THE DISCLOSURE

Therefore, an aspect of the detailed description is to provide a robot cleaner having a novel structure and arrangement.

Another aspect of the detailed description is to provide a robot cleaner having a dust box of a maximum capacity within a restricted space, by an efficient spatial arrangement.

These objects are solved by the features of the independent claim. According to one embodiment, a robot cleaner may comprise a suction unit configured to suck dust-contained air; a cyclone unit provided at an upper side of the suction unit, the cyclone unit having at least one suction opening for sucking air and at least one cyclone for passing air therethrough; at least one guiding member extending from the suction unit toward the cyclone unit for connection between the suction unit and the at least one suction opening; and a dust box in communication with a dust discharge opening of the cyclone unit for collecting dust filtered by the cyclone unit, wherein the dust box is located between the cyclone unit and the suction unit along a horizontal line. Thus, the suction unit and the cyclone unit may be spaced apart from each other along the horizontal line.

According to one embodiment, there is provided a robot cleaner, including: a suction unit configured to suck dust-containing air; a cyclone unit provided at a rear upper side of the suction unit, the cyclone unit having at least one suction opening (preferably a first suction opening and a second suction opening) for sucking air, and the cyclone unit having at least one cyclone (preferably a first cyclone and a second cyclone) for passing air therethrough, wherein the air is dust-filtered by a centrifugal force; at least one guiding member (preferably a first guiding member and a second guiding member) extending upward from the suction unit, i.e. toward the cyclone unit, with an inclination angle, for connection between the suction unit and the suction opening; and a dust box communicated with a dust discharge opening provided at a front side of the cyclone unit so as to collect dust filtered by the cyclone unit. In other words, the suction unit may define a front side of the robot cleaner and of parts thereof. The cyclone unit may be located above the suction unit and at the rear side thereof. Thus, the cyclone unit may be arranged at a rear side of the robot cleaner. That is, the dust box may be arranged between the suction unit and the cyclone unit, e.g. along a horizontal direction, or a moving direction of the robot cleaner. Hence, air sucked in by the suction unit may be guided upward and rearwards by the guiding member to the cyclone unit, and then exit the cyclone unit towards a front side thereof. In other words, the air path may make a turn of more than 90 degrees, preferably more than 120 degrees, preferably approximately 180 degrees. Preferably, the dust box is partially or wholly accommodated between the first and second guiding members. Preferably, the robot cleaner includes further a cleaner body, wherein the suction unit is provided at a front side of the cleaner body.

Here, front side or portion of the cleaner body refers to the side or portion of the cleaner body which is directed in the (main) moving direction during normal operation, opposite to the rear side or portion of the cleaner body. Likewise, upper side or portion of the suction unit refers to the top of the suction unit during normal operation of the robot cleaner, opposite to the lower side or portion. Also, directions, such as downward or upward, refer to the orientation of the robot cleaner during normal operation.

In an embodiment, the dust box may include a dust box body having the dust discharge opening, and forming a space to collect dust filtered by the cyclone unit. Further, the dust box may include a dust box cover coupled to the dust box body so as to open and close an opening of the dust box body.

In an embodiment, the dust box body may include a first region communicated with the dust discharge opening; and a second region extending downward from the first region, having a smaller sectional area than the first region. Here, the second region may be partially or wholly accommodated between the first and second guiding members. In other words, the second region of the dust box body may be located below the first region.

In an embodiment, at least part of the first region may be disposed on the first and second guiding members.

In an embodiment, the first and second guiding members may be formed such that at least parts thereof are bent to enclose the second region at two sides.

In an embodiment, the dust box cover may be disposed with an inclination angle such that at least part thereof faces the dust discharge opening. That is, a surface of the dust box cover may be disposed opposite to the dust discharge opening of the cyclone unit.

In an embodiment, the first cyclone and the second cyclone may be disposed close to the first suction opening and the second suction opening, respectively.

In an embodiment, the first and second cyclones may be disposed to face each other. Thus, the cyclones may be arranged next to each other, i.e. side by side, in the cyclone unit.

Preferably, a fan unit is connected to the cyclone unit, and configured to discharge dust-filtered air to outside. In an embodiment, the fan unit may be provided at a rear lower side of the cyclone unit. In an embodiment, the robot cleaner may further include a driving unit disposed between the first and second fans, and configured to generate a suction force by driving the first and second fans.

In an embodiment, the cyclone unit may be coupled onto the fan unit so as to be spaced from a bottom surface or lower side of the cleaner body.

In an embodiment, the fan unit may include a first fan and a second fan configured to suck dust-filtered air and to discharge it to outside. Here, the fan unit may include a first communication member configured to guide air introduced into an inner space of the cyclone unit to the first fan and a second communication member configured to guide air introduced into the inner space of the cyclone unit to the second fan. In case that the cyclone unit includes two cyclones, the fan unit may include a first communication member configured to guide air introduced into an inner space of the first cyclone to the first fan and a second communication member configured to guide air introduced into an inner space of the second cyclone to the second fan.

According to another embodiment, there is provided a robot cleaner, including: a suction unit configured to suck dust-contained air; a cyclone unit provided at a rear side of the suction unit, and configured to filter dust from air sucked thereto through the suction unit by a centrifugal force; a dust box communicated with a dust discharge opening provided at a front side of the cyclone unit so as to collect dust filtered by the cyclone unit; and a fan unit connected to the cyclone unit, and configured to discharge dust-filtered air to outside, wherein the cyclone unit is coupled onto the fan unit such that the dust box has a predetermined depth, the dust box disposed at a front upper side of the fan unit and connected to the cyclone unit.

According to a further example, a robot cleaner may comprise a suction unit configured to suck dust-contained air; a cyclone unit provided at the suction unit, the cyclone unit having a first suction opening and a second suction opening for sucking air and a first cyclone and a second cyclone for passing air therethrough; a first guiding member and a second guiding member extending from the suction unit toward the cyclone unit, the first guiding member for connection between the suction unit and the first suction opening, the second guiding member for connection between the suction unit and the second suction opening; and a dust box in communication with a dust discharge opening of the cyclone unit for collecting dust filtered by the cyclone unit, the dust box partially or wholly accommodated between the first and second guiding members.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a perspective view of a robot cleaner according to the present invention;
FIG. 2 is a bottom view of the robot cleaner of FIG. 1;
FIG. 3 is a conceptual view illustrating main components inside the robot cleaner of FIG. 1;
FIG. 4 is a front view of the robot cleaner of FIG. 3;
FIG. 5 is a sectional view taken along line 'A-A' in FIG. 4;
FIG. 6 is a side sectional view illustrating a cyclone unit and a fan unit separated from the robot cleaner of FIG. 3;
FIG. 7A is a perspective view of the cyclone unit and the fan unit of FIG. 6;
FIG. 7B is a conceptual view illustrating a state where a second case of the cyclone unit of FIG. 7A has been removed;
FIG. 8 is a conceptual view illustrating a modification example of the cyclone unit of FIG. 7A;
FIG. 9A is a perspective view of the fan unit shown in FIG. 6;
FIG. 9B is a conceptual view illustrating a state where a first communication member has been removed from the fan unit of FIG. 9A;
FIG. 9C is a conceptual view illustrating a state where a first fan cover has been removed from the fan unit of FIG. 9B; and
FIG. 10 is an enlarged view of part 'B' shown in FIG. 5.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

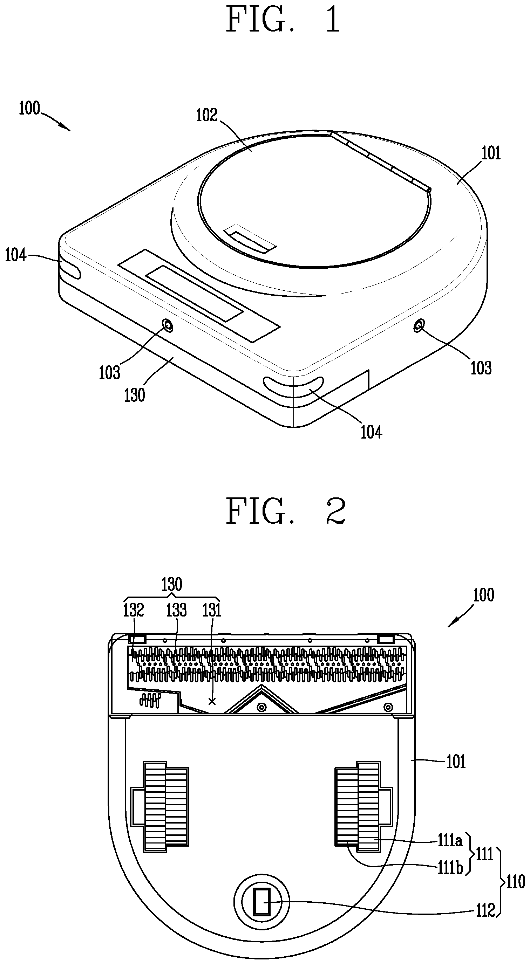

FIG. 1 is a perspective view of a robot cleaner 100 according to the present invention, and FIG. 2 is a bottom view of the robot cleaner 100 of FIG. 1.

Referring to FIGS. 1 and 2, the robot cleaner 100 performs a function to clean a floor by sucking dust (including foreign materials) on the floor, while autonomously moving on a predetermined region.

The robot cleaner 100 includes a cleaner body 101 for performing a moving function, a controller (not shown) and a moving unit 110.

The cleaner body 101 is configured to accommodate components therein, and to move on a floor by the moving unit 110. A controller for controlling an operation of the robot cleaner 100, a battery (not shown) for supplying power to the robot cleaner 100, an obstacle sensor 103 for avoiding an obstacle while moving, a damper 104 for absorbing a shock when colliding with an obstacle, etc. may be accommodated in or mounted to the cleaner body 101.

The moving unit 110 is configured to move (or rotate) the cleaner body 101 back and forth or right and left, and is provided with main wheels 111 and a supplementary wheel 112.

The main wheels 111 are provided at two sides of the cleaner body 101, are configured to be rotatable to one direction or another direction according to a control signal. The main wheels 111 may be configured to be independently driven. For instance, each of the main wheels 111 may be driven by a different motor.

Each of the main wheels 111 may be composed of wheels 111a and 111b having different radiuses with respect to a rotation shaft. Under such configuration, in a case where the main wheel 111 moves up on an obstacle such as a bump, at least one of the wheels 111a and 111b contacts the obstacle. This can prevent idling of the main wheel 111.

The supplementary wheel 112 is configured to support the cleaner body 101 together with the main wheels 111, and to supplement movement of the cleaner body by the main wheels 111.

Besides the aforementioned moving function, the robot cleaner 100 is provided with its own cleaning function. The present invention provides the robot cleaner 100 of a new structure and arrangement, the robot cleaner 100 having an enhanced cleaning function by effectively separating dust from sucked air.

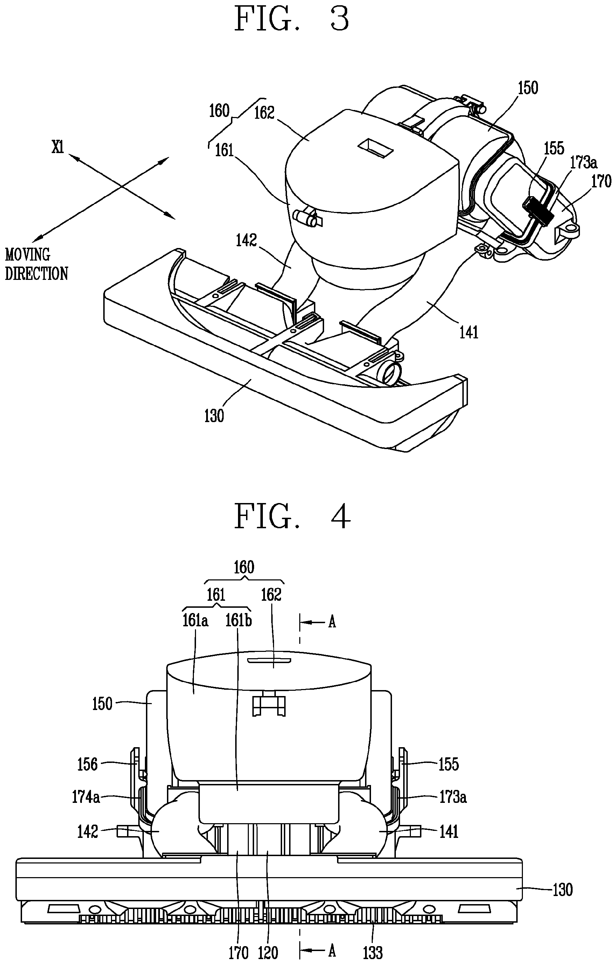

Hereinafter, the robot cleaner will be explained in more detail with reference to FIGS. 3 to 5.

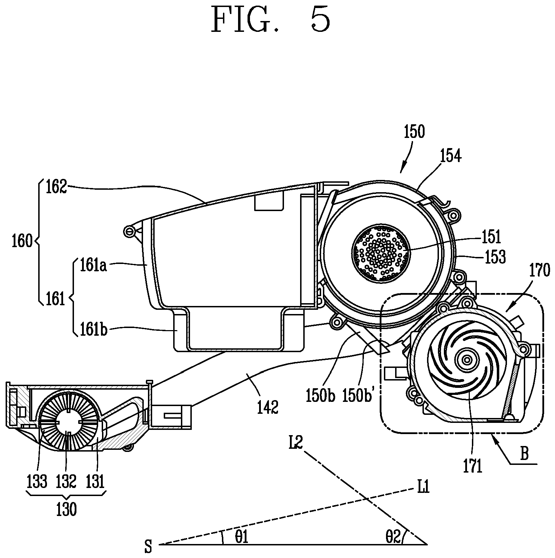

FIG. 3 is a conceptual view illustrating main components inside the robot cleaner 100 of FIG. 1, FIG. 4 is a front view of the robot cleaner 100 of FIG. 3, and FIG. 5 is a sectional view taken along line 'A-A' in FIG. 4.

Referring to FIGS. 3 to 5, the robot cleaner 100 includes a driving unit 120, a suction unit 130, a first guiding member 141, a second guiding member 142, and a cyclone unit 150.

The driving unit 120 is provided with a motor (not shown) mounted to the cleaner body 101 and generating a driving force. The motor is configured to generate a suction force for sucking dust-contained air on a floor, by rotating a first fan 171 and a second fan 172 to be explained later.

The suction unit 130 is provided at a bottom portion of the cleaner body 101, and is configured to suck dust-contained air on a floor by the driving unit 120. The suction unit 130 may be arranged at a front side of the cleaner body 101, and may be detachably mounted to the cleaner body 101.

Referring to FIG. 5, the suction unit 130 includes a suction opening 131, a roller 132 and a brush 133.

The suction opening 131 may be formed to extend in a lengthwise direction of the suction unit 130. The roller 132 is rotatably installed at the suction opening 131, and the brush 133 is mounted to an outer circumferential surface of the roller 132. The brush 133 is configured to sweep up dust on a floor to the suction opening 131. The brush 133 may be formed of various materials including a fibrous material, an elastic material, etc.

The first guiding member 141 and the second guiding member 142 may be provided between the suction unit 130 and the cyclone unit 150, thereby connecting the suction unit 130 and the cyclone unit 150 to each other. The first guiding member 141 and the second guiding member 142 are spaced from each other. One ends of the first and second guiding members 141 and 142 coupled to the suction unit 130 may be fixed to the cleaner body 101.

Air sucked through the suction unit 130 is introduced into the cyclone unit 150 in a diverged manner, through the first and second guiding members 141 and 142. Such configuration is advantageous in that air sucking efficiency is more enhanced, than in a case where a single guiding member is provided.

The first and second guiding members 141 and 142 may be disposed to be upward inclined toward the cyclone unit 150, so as to extend from the suction unit 130 toward the cyclone unit 150 (specifically, a first suction opening 150a and a second suction opening 150b), the cyclone unit 150 arranged at a rear upper side of the suction unit 130.

The cyclone unit 150 may be provided with a cylindrical inner circumferential surface, and may be long-formed along one direction (X1). That is, the cyclone unit 150 may have an approximate cylindrical shape. The one direction (X1) may be a direction perpendicular to a moving direction of the robot cleaner 100.

The cyclone unit 150 is configured to filter dust from air sucked thereto through the suction unit 130. More specifically, air sucked into the cyclone unit 150 is rotated along an inner circumferential surface of the cyclone unit 150. During such process, dust is collected to a dust box 160 communicated with a dust discharge opening 150e, and dust-filtered air is introduced into a first cyclone 151 and a second cyclone 152.

The dust discharge opening 150e is formed at a front part of the cyclone unit 150. The dust discharge opening 150e may be formed between the first suction opening 150a and the second suction opening 150b (or between the first cyclone 151 and the second cyclone 152), i.e., at a central portion of the cyclone unit 150. Under such structure, dust included in air introduced into two sides of the cyclone unit 150 through the first and second suction openings 150a and 150b, rotates along an inner circumferential surface of the cyclone unit 150, toward a central part from an end part of the cyclone unit 150. Then the dust is collected to the dust box 160 through the dust discharge opening 150e.

The dust box 160 is connected to the cyclone unit 150, and is configured to collect dust filtered by the cyclone unit 150. In this embodiment, the dust box 160 is disposed between the suction unit 130 and the cyclone unit 150.

The dust box 160 is detachably mounted to the cyclone unit 150 so as to be separable from the cleaner body 101. Such structure will be explained in more detail. When a cover 102 openably-coupled to the cleaner body 101 is open, the dust box 160 may be in a separable state by being exposed to outside. The dust box 160 may be configured to be exposed to outside, thereby forming appearance of the robot cleaner 100 together with the cleaner body 101. In this case, a user can check the amount of dust accumulated in the dust box 160 without opening the cover 102.

The dust box 160 may include a dust box body 161 and a dust box cover 162. The dust box body 161 forms a space for collecting dust filtered by the cyclone unit 150, and the dust box cover 162 is coupled to the dust box body 161 so as to open and close an opening of the dust box body 161. For instance, the dust box cover 162 may be configured to open and close the opening of the dust box body 161, by being hinge-coupled to the dust box body 161.

The dust discharge opening 150e may be provided at the dust box body 161. However, the present invention is not limited to this. The dust discharge opening 150e may be also formed at the dust box cover 162 according to a modified design.

As aforementioned, the dust box 160 connected to the cyclone unit 150 may be formed to have a predetermined depth, since the cyclone unit 150 is arranged at an upper side of the suction unit 130. For efficient spatial arrangement, at least part of the dust box 160 may be accommodated in a space between the first guiding member 141 and the second guiding member 142.

In this embodiment, the dust box body 161 includes a first portion 161a and a second portion 161b having different sectional areas.

More specifically, the first portion 161a may be communicated with the dust discharge opening 150e, and at least part of the first portion 161a may be disposed on the first and second guiding members 141 and 142. As shown in FIG. 4, in this embodiment, two sides of the first portion 161a are disposed on the first and second guiding members 141 and 142.

The second portion 161b is formed to extend to a lower side of the first portion 161a, and to have a smaller sectional area than the first portion 161a. Accordingly, at least part of the second portion 161 is accommodated in a space between the first and second guiding members 141 and 142. The first and second guiding members 141 and 142 may be formed such that at least part thereof is bent to enclose the second portion 161b at two sides.

Under such structure, dust collected into the dust box 160 is firstly accumulated in the second portion 161b. In a modified embodiment, an inclined portion (not shown), inclined toward the second portion 161b so that dust can move to the second portion 161b, may be provided between the first portion 161a and the second portion 161b.

The dust box cover 162 may be arranged to be inclined so that at least part thereof can face the dust discharge opening 150e. Under such structure, dust introduced into the dust box 160 through the dust discharge opening 150e can directly collide with the dust box cover 162 without being windblown, thereby being collected in the dust box body 161 (mainly, the second portion 161b).

A fan unit 170 may be connected to the cyclone unit 150, such that dust-filtered air is discharged to outside. The fan unit 170 is configured to generate a suction force by being driven by the driving unit 120, and to finally discharge clean air to outside.

The fan unit 170 may be fixed to the cleaner body 101, and may be provided at a rear lower side of the cyclone unit 150. For such arrangement, in this embodiment, the cyclone unit 150 is coupled onto the fan unit 170 (specifically, a first communication member 173 and a second communication member 174), thereby being spaced from a bottom surface of the cleaner body 101.

As shown in FIG. 5, an arbitrary line (L1), which connects two ends of the first guiding member 141 or the second guiding member 142 to each other, has an inclination angle (θ1), from a bottom surface (S) of the cleaner body 101. An arbitrary line (L2), which connects the cyclone unit 150 and the fan unit 170 to each other, has an inclination angle (θ2), from the bottom surface (S) of the cleaner body 101. As such inclination angles (θ1 and θ2) are controlled, a volume of the dust box 160 may be variously changed.

Hereinafter, a detailed structure of the cyclone unit 150 and the fan unit 170 will be explained.

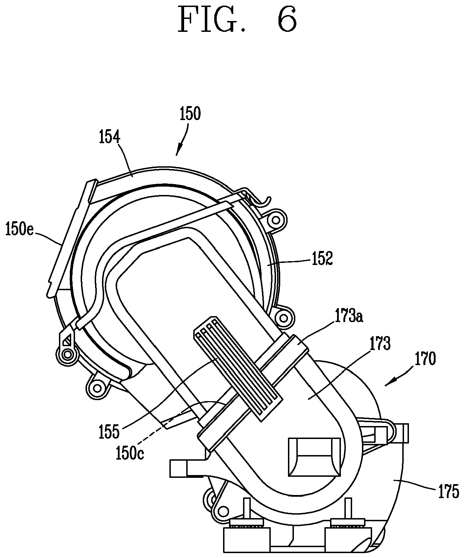

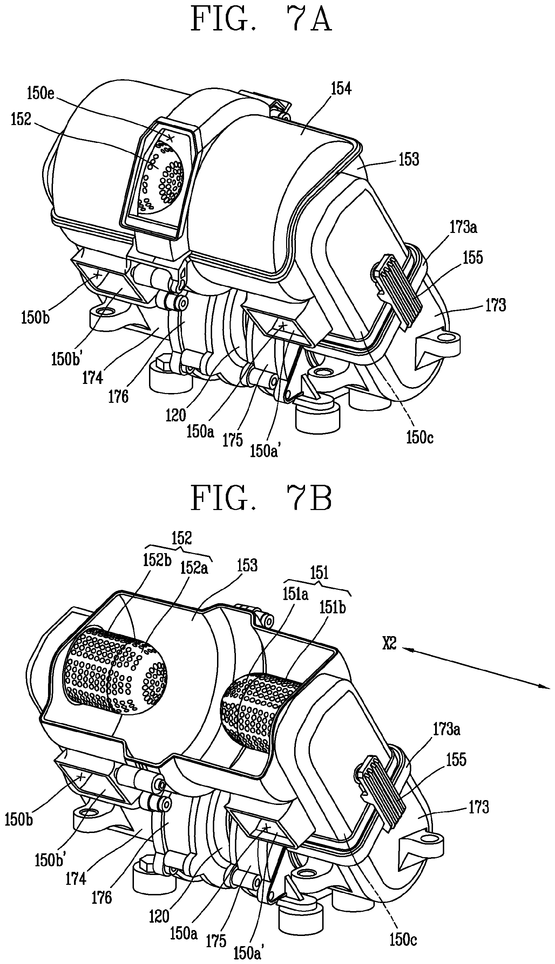

FIG. 6 is a side sectional view illustrating the cyclone unit 150 and the fan unit 170 separated from the robot cleaner 100 of FIG. 3. FIG. 7A is a perspective view of the cyclone unit 150 and the fan unit 170 of FIG. 6. The FIG. 7B is a conceptual view illustrating a state where a second case 154 of the cyclone unit 150 of FIG. 7A has been removed.

Referring to FIGS. 6 to 7B together with the aforementioned FIGS, the cyclone unit 150 is provided with the first suction opening 150a communicated with the first guiding member 141, and the second suction opening 150b communicated with the second guiding member 142. The first suction opening 150a and the second suction opening 150b may be formed at two sides of the cyclone unit 150, such that air introduced into the cyclone unit 150 through the first suction opening 150a and the second suction opening 150b rotates along an inner circumferential surface of the cyclone unit 150, toward a central part from an end part of the cyclone unit 150.

The cyclone unit 150 may further include a first suction guide 150a' and a second suction guide 150b' configured to guide air sucked to the cyclone unit 150 through the first suction opening 150a and the second suction opening 150b to an inner circumferential surface of the cyclone unit 150, respectively. The first suction guide 150a' is formed at the first suction opening 150a toward an inner circumferential surface of the cyclone unit 150, and the second suction guide 150b' is formed at the second suction opening 150b toward an inner circumferential surface of the cyclone unit 150.

The cyclone unit 150 is provided therein with the first cyclone 151 and the second cyclone 152, such that dust-filtered air is introduced into the first cyclone 151 and the second cyclone 152. The first cyclone 151 has a structure that an air passing hole 151b is formed at a protruding member 151a having an empty inner space, and the second cyclone 152 has a structure that an air passing hole 152b is formed at a protruding member 152a having an empty inner space. That is, dust cannot pass through the air passing holes 151b and 152b, whereas air can pass through the air passing holes 151b and 152b to thus be introduced into the inner spaces of the protruding members 151a and 152a.

As shown, the first cyclone 151 may be arranged close to the first suction opening 150a , and the second cyclone 152 may be arranged close to the second suction opening 150b . Under such structure, air sucked into the cyclone unit 150 through the first suction opening 150a is mainly introduced into the first cyclone 151, and air sucked into the cyclone unit 150 through the second suction opening 150b is mainly introduced into the second cyclone 152. Thus, dust can be efficiently filtered from the sucked air, and the dust-filtered air can be more efficiently discharged from the cyclone unit 150.

The first and second cyclones 151 and 152 may be provided at two ends of the cyclone unit 150 in a facing manner. In this case, the first and second cyclones 151 and 152 may be formed to protrude from the same axis (X2). The axis (X2) may be perpendicular to a moving direction (forward or backward direction) of the robot cleaner 100. The axis (X2) may be identical to the aforementioned one direction (X1).

The first and second cyclones 151 and 152 may be arranged at central regions of two end portions of the cyclone unit 150 so as to have a preset separating distance from an inner circumferential surface of the cyclone unit 150. Under such structure, dust can rotate along an inner circumferential surface of the cyclone unit 150, and dust-filtered air can be mainly introduced into the first and second cyclones 151 and 152.

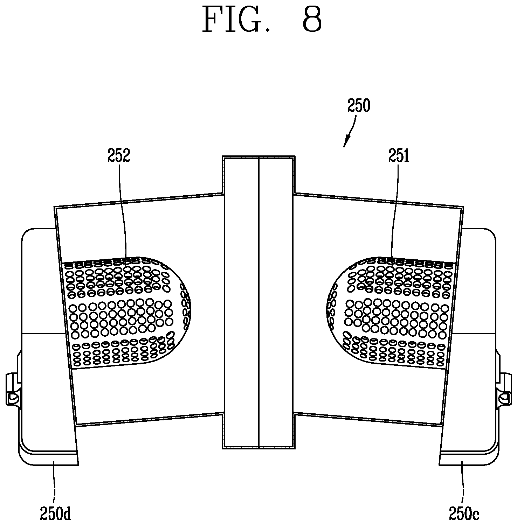

Referring to FIG. 8 illustrating a modification example of the cyclone unit 150 of FIG. 7A, a cyclone unit 250 may be configured so that air which has passed through first and second suction openings (not shown) can be introduced toward a central part of the cyclone unit 250. Under such structure, air introduced into the cyclone unit 250 can easily rotate toward a central part of the cyclone unit 250 from an end part of the cyclone unit 250.

In the drawings, the cyclone unit 250 is arranged so that a region for accommodating a first cyclone 251 and a region for accommodating a second cyclone 252 have a preset angle therebetween. The preset angle viewed from a front side may be 180° or less.

The first and second suction openings may be formed toward a central part of the cyclone unit 250 such that air is introduced into the central part of the cyclone unit 250. The first and second suction guides aforementioned with reference to the aforementioned embodiment may be formed to extend toward the central part of the cyclone unit 250.

Referring to FIGS. 6 and 7B back, the cyclone unit 150 may include a first case 153 and a second case 154. The first case 153 is provided with the first and second suction openings 150a and 150b and the first and second cyclones 151 and 152, and is configured to be coupled to the first and second guiding members 141 and 142. The second case 154 is provided with a dust discharge opening, and is openably coupled to the first case 153. For instance, the second case 154 may be hinge-coupled to the first case 153, and may be configured to open and close the first case 153 by being rotated.

Under such configuration, as the second case 154 is separated from the first case 153 or rotated, inside of the cyclone unit 150 may be opened. This is advantageous in that dust, collected in the air passing holes 151b and 152b of the first and second cyclones 151 and 152 without having passed therethrough, can be easily removed.

The cyclone unit 150 may further include a first discharge opening 150c and a second discharge opening (not shown) communicated with inner spaces of the first and second cyclones 151 and 152 so that dust-filtered air can be discharged. As shown, the first discharge opening 150c and the second discharge opening (not shown) may be provided at two sides of the cyclone unit 150.

The fan unit 170 may be connected to each of the first discharge opening 150c and the second discharge opening (not shown), such that dust-filtered air is discharged to outside.

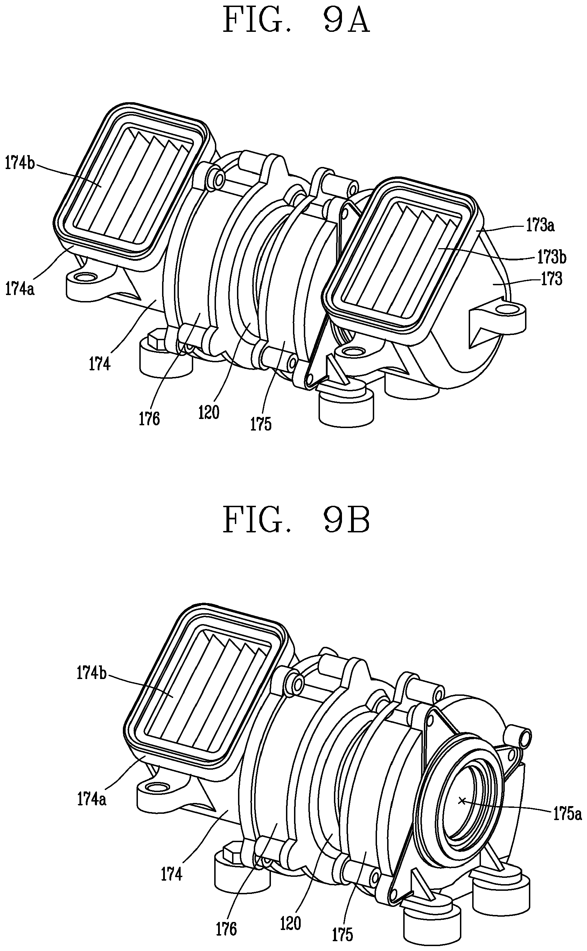

Hereinafter, a detailed structure of the fan unit 170 will be explained in more detail with reference to FIGS. 9A to 10.

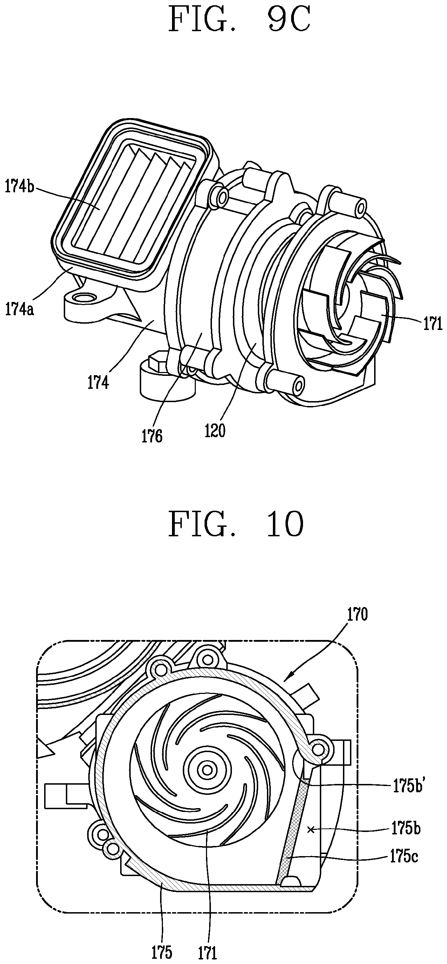

FIG. 9A is a perspective view of the fan unit 170 shown in FIG. 6, FIG. 9B is a conceptual view illustrating a state where a first communication member 173 has been removed from the fan unit 170 of FIG. 9A, and FIG. 9C is a conceptual view illustrating a state where a first fan cover 175 has been removed from the fan unit 170 of FIG. 9B. FIG. 10 is an enlarged view of part 'B' shown in FIG. 5.

Referring to the above figures with reference to the aforementioned figures, the fan unit 170 includes a first fan 171, a second fan 172, a first communication member 173 and a second communication member 174.

The first and second fans 171 and 172 are configured to suck dust-filtered air and to discharge the air to outside while being rotated by the driving unit 120. Each of the first and second fans 171 and 172 may be formed as a volute fan.

In this embodiment, the driving unit 120 is disposed between the first and second fans 171 and 172, and the first and second fans 171 and 172 are driven to generate a suction force. However, the present invention is not limited to this. That is, an installation position of the driving unit 120 may be variable.

The first communication member 173 is configured to connect the first discharge opening 150c of the cyclone unit 150 with the first fan 171, and thus to guide air introduced into the inner space of the first cyclone 151 into the first fan 171. Likewise, the second communication member 174 is configured to connect the second discharge opening of the cyclone unit 150 with the second fan 172, and thus to guide air introduced into the inner space of the second cyclone 152 into the second fan 172.

As aforementioned (refer to FIGS. 6 to 7B), in a case where the cyclone unit 150 includes the first case 153 and the second case 154, the first case 153 may be provided with the first discharge opening 150c and the second discharge opening (not shown), and may be coupled to each of the first and second communication members 173 and 174.

A first coupling member 155 for coupling with the first communication member 173, and a second coupling member 156 for coupling with the second communication member 174 may be provided at two sides of the first case 153.

For instance, each of the first and second coupling members 155 and 156 may include a hook and an elastic member. More specifically, the hooks are rotatably coupled to two sides of the first case 153, and are locked by the first and second communication members 173 and 174. The elastic members are configured to elastically press the hooks so that a locked state of the hooks to the first and second communication members 173 and 174 can be maintained. The first and second communication members 173 and 174 may be provided with locking protrusions 173a and 174a configured to lock the hooks so that the first case 153 can be prevented from being separated from the first and second communication members 173 and 174.

Coupling of the first case 153 with the first and second communication members 173 and 174 is not limited to the above coupling. That is, the first case 153 may be coupled with the first and second communication members 173 and 174 in various manners without an additional coupling member, e.g., by using a locking structure or by bonding.

Fine dust filters 173b and 174b, configured to filter fine dust from dust-filtered air, may be mounted to the first and second communication members 173 and 174. As the fine dust filters 173b and 174b, HEPA filters may be used. For replacement, the fine dust filters 173b and 174b may be configured to be exposed to outside when the cyclone unit 150 is separated from the first and second communication members 173 and 174.

The fan unit 170 may further include a first fan cover 175 for accommodating the first fan 171 therein, and a second fan cover 176 for accommodating the second fan 172 therein. The first fan cover 175 is provided with a first air inlet 175a in a direction of a rotation shaft of the first fan 171, and is provided with a first air outlet 175b in a radius direction of the first fan 171. Likewise, the second fan cover 176 is provided with a second air inlet (not shown) in a direction of a rotation shaft of the second fan 172, and is provided with a second air outlet (not shown) in a radius direction of the second fan 172.

A mechanism to suck and discharge air according to such structure will be explained in more detail. Dust-filtered air is introduced into the first fan cover 175 through the first air inlet 175a by a suction force due to rotation of the first fan 171. Then the air is moved to a side direction by rotation of the first fan 171 implemented as a volute fan, and is discharged out through the first air outlet 175b. Such mechanism may be equally applied to processes to suck and discharge air by rotation of the second fan 172.

In order to reduce noise generated when the first and second fans 171 and 172 are driven and in order to increase an air volume, the following structure may be applied. Hereinafter, this will be explained in more detail with reference to FIG. 10.

A preset gap may be maintained between an inner circumferential surface of the first fan cover 175 and an end portion of the first fan 171 disposed close to the first fan cover 175. Likewise, a preset gap may be maintained between an inner circumferential surface of the second fan cover 176 and an end portion of the second fan 172 disposed close to the second fan cover 176.

The first fan cover 175 may be provided with a first exhaustion guide 175b' for guiding smooth exhaustion of dust-filtered air, and the second fan cover 176 may be provided with a second exhaustion guide (not shown). More specifically, the first exhaustion guide 175b' may extend from an inner circumferential surface of the first fan cover 175 toward the first air outlet 175b, in a rounded shape.

A first exhaustion hole (not shown) corresponding to the first air outlet 175b, and a second exhaustion hole (not shown) corresponding to the second air outlet (not shown) may be formed at the cleaner body 101.

A fine dust filter 175c may be mounted to at least one of the first fan cover 175 and the cleaner body 101, such that cleaner air is finally discharged to outside. As the fine dust filter 175c, an HEPA filter may be used.

The fine dust filter 175c is mounted to at least one of the first air outlet 175b and the first exhaustion hole in a covering manner, and is configured to filter fine dust from dust-filtered air. Likewise, the fine dust filter 175c may be mounted to at least one of the second fan cover 176 and the cleaner body 101.

The robot cleaner according to the present invention can have the following advantages.

Firstly, by arranging the dust box between the suction unit and the cyclone unit, preferably such that the air flow may make a turn or change in flow direction of more than 90 degrees, a compact design and efficient air flow may be generated. Further, when a single cyclone unit is provided with therein a plurality of cyclones, dust can be effectively filtered from sucked air. For an enhanced dust filtering function, a plurality of guiding members may be provided to correspond to a plurality of cyclones, so that air sucked through a suction unit can be introduced into the cyclone unit after dust has been filtered from the air. A fan unit is configured so that air which has passed through one or more cyclones can be discharged to outside. Under such structure, dust can be more effectively filtered from sucked air, and dust-filtered air can be discharged to outside, thereby enhancing a cleaning function of the robot cleaner.

Secondly, the robot cleaner according to the present invention may be provided with a suction guide for guiding sucked air to an inner circumferential surface of the cyclone unit, and/or an exhaustion guide extending from an inner circumferential surface of a fan cover toward an air outlet. Accordingly, the robot cleaner can reduce noise when sucking and discharging air.

Thirdly, in the robot cleaner according to the present invention, large particle-sized dust is filtered from air by the cyclone unit, and then fine dust may be filtered from dust-filtered air by a fine dust filter provided on at least one of an inlet side and an outlet side of the fan unit. Thus, cleaner air can be discharged to outside of the robot cleaner.

Fourthly, the cyclone unit having one or more cyclones is arranged at a rear upper side of the suction unit, and one or more guiding members extend from the suction unit toward the cyclone unit with an inclination angle, for connection between the suction unit and the cyclone unit. And the fan unit may be provided at a rear lower side of the cyclone unit. Under such new structure and arrangement, the robot cleaner can have an efficient spatial arrangement and an enhanced cleaning performance.

Fifthly, in a case where two guiding members are provided, at least part of a dust box may be accommodated in a space between the guiding members. Thus, the dust box can have a larger capacity within the restricted space.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

### List of Embodiments

**Embodiment 1:** A robot cleaner, comprising: a suction unit configured to suck dust-contained air; a cyclone unit provided at an upper side of the suction unit, the cyclone unit having at least one suction opening for sucking air and at least one cyclone for passing air therethrough; at least one guiding member extending from the suction unit toward the cyclone unit for connection between the suction unit and the at least one suction opening; and a dust box in communication with a dust discharge opening of the cyclone unit for collecting dust filtered by the cyclone unit, wherein the dust box is located between the cyclone unit and the suction unit along a horizontal line.
**Embodiment 2:** The robot cleaner of embodiment 1, wherein the dust box is disposed next to the at least one guiding member.
**Embodiment 3:** The robot cleaner of embodiment 1 or 2, wherein the cyclone unit has a first suction opening and a second suction opening for sucking air, and a first and a second guiding member is provided for respectively connecting the suction unit with the first and second suction opening.
**Embodiment 4:** The robot cleaner of embodiment 3, wherein the dust box is partially or wholly accommodated between the first and second guiding members.
**Embodiment 5:** The robot cleaner of embodiment 3 or 4, wherein the dust box includes: a dust box body having the dust discharge opening, and forming a space to collect dust filtered by the cyclone unit; and a dust box cover coupled to the dust box body so as to open and close an opening of the dust box body
**Embodiment 6:** The robot cleaner of embodiment 5, wherein the dust box cover is disposed with an inclination angle and at least part thereof faces the dust discharge opening.
**Embodiment 7:** The robot cleaner of embodiment 5 or 6, wherein the dust box body includes: a first region communicated with the dust discharge opening; and a second region extending from the first region, the second region having a smaller sectional area than the first region and being partially or wholly accommodated between the first and second guiding members.
**Embodiment 8:** The robot cleaner of embodiment 7, wherein part of the first region is disposed on the first and second guiding members.
**Embodiment 9:** The robot cleaner of embodiment 7 or 8, wherein at least parts of the first and second guiding members are bent to enclose the second region at two sides.
**Embodiment 10:** The robot cleaner according to any one of the preceding embodiments, wherein the cyclone unit includes a first suction opening and a second suction opening, and a first and a second cyclone, the first cyclone and the second cyclone being disposed at the first suction opening and the second suction opening, respectively.
**Embodiment 11:** The robot cleaner of embodiment 10, wherein the first and second cyclones are disposed to face each other.
**Embodiment 12:** The robot cleaner of embodiment 10 or 11, further comprising a fan unit provided at the cyclone unit and connected thereto, and configured to discharge dust-filtered air to an outside of the robot cleaner.
**Embodiment 13:** The robot cleaner of embodiment 12, wherein the cyclone unit is coupled onto the fan unit and spaced from a bottom surface of the cleaner body.
**Embodiment 14:** The robot cleaner of embodiment 12 or 13, wherein the fan unit includes: a first fan and a second fan configured to suck dust-filtered air and to discharge it to outside; a first communication member configured to guide air introduced into an inner space of the first cyclone to the first fan; and a second communication member configured to guide air introduced into an inner space of the second cyclone to the second fan.
**Embodiment 15:** The robot cleaner according to any one of the preceding embodiments, further comprising a cleaner body, wherein the suction unit is provided at a front side of the cleaner body and the cyclone unit is provided at a rear side of the suction unit, with the dust discharge opening being provided at a front side of the cyclone unit, and wherein the dust box is provided at a front side of the cyclone unit.

## Claims

1. A robot cleaner (100), including:
a suction unit (130) configured to suck dust-containing air;
a cyclone unit (150) provided at the suction unit (130), the cyclone unit (150) having a first suction opening (150a) and a second suction opening (150b) for sucking air, and a first cyclone (151) and a second cyclone (152) for passing air therethrough;
a first guiding member (141) and a second guiding member (142) extending from the suction unit toward the cyclone unit (150), the first guiding member (141) for connection between the suction unit (130) and the first suction opening (150a) and the second guiding member (142) for connection between the suction unit (130) and the second suction opening (150b); and
a dust box (160) in communication with a dust discharge opening (150e) of the cyclone unit (150) for collecting dust filtered by the cyclone unit (150), the dust box being accommodated between the first and second guiding members.

2. The robot cleaner (100) of claim 1, further comprising:
a fan unit (170) connected to the cyclone unit (150) and configured to discharge dust-filtered air to an outside of the robot cleaner (100), the fan unit (170) comprising:
a first fan (171) configured to suck dust-filtered air and discharge the dust-filtered air to the outside;
a second fan (172) configured to suck dust-filtered air and discharge the dust-filtered air to the outside;
a first communication member (173) configured to guide air introduced into an inner space of the first cyclone (151) to the first fan (171); and
a second communication member (174) configured to guide air introduced into an inner space of the second cyclone (152) to the second fan(172).

3. The robot cleaner (100) of claim 2, further comprising:
a driving unit (120) disposed between the first fan (171) and the second fan (172), the driving unit (120) being configured to generate a suction force by driving the first fan (171) and the second fan (172).

4. The robot cleaner (100) of claim 2 or 3, wherein the fan unit (170) further comprises:
a first fine dust filter (173b) mounted to the first communication member (173) and configured to filter fine dust; and
a second fine dust filter (174b) mounted to the second communication member (174) and configured to filter fine dust.

5. The robot cleaner (100) of claim 2, 3 or 4, wherein the fan unit (170) further comprises:
a first fan cover (175) configured to accommodate the first fan (171) therein, the first fan cover (175) including:
a first air inlet (175a) formed in a direction of a rotation shaft of the first fan (171); and
a first air outlet (175b) formed in a radius direction of the first fan (171); and
a second fan cover (176) configured to accommodate the second fan (172) therein, the second fan cover (176) including:
a second air inlet formed in a direction of a rotation shaft of the second fan (172); and
a second air outlet formed in a radius direction of the second fan (172).

6. The robot cleaner (100) of claim 5, wherein the first fan cover (175) further includes a first exhaustion guide (175b') extending from an inner circumferential surface of the first fan cover (175) toward the first air outlet (175b), the first exhaustion guide (175b') having a rounded shape for guiding smooth exhaustion of dust-filtered air.

7. The robot cleaner (100) according to any one of claims 2 to 6, further comprising:
a first fine dust filter (175c) mounted to the first air outlet (175b); and/or
a second fine dust filter mounted to the second air outlet.

8. The robot cleaner (100) according to any one of the preceding claims, wherein the first guiding member (141) and the second guiding member (142) are inclined at a first angle with respect to the floor surface, and a line connecting the cyclone unit (150) and the fan unit (170) is inclined at a second angle with respect to the floor surface, the first angle being smaller than the second angle.

9. The robot cleaner (100) according to any one of the preceding claims, wherein the cyclone unit (150) further comprises:
a first suction guide (150a') formed at the first suction opening (150a) toward an inner circumferential surface of the cyclone unit (150); and
a second suction guide (150b') formed at the second suction opening (150b) toward the inner circumferential surface of the cyclone unit (150),
the first and second suction guides (150a', 150b') being configured to guide air sucked through the first and second suction openings (150a, 150b), respectively, to the inner circumferential surface of the cyclone unit (150).

10. The robot cleaner (100) according to any one of the preceding claims, wherein the cyclone unit (150) is coupled onto the fan unit (170) so as to be spaced apart from a bottom surface of the cleaner (100).

11. The robot cleaner (100) according to any one of the preceding claims, wherein the dust box (160) is arranged between the suction unit (130) and the cyclone unit (150).

12. The robot cleaner (100) according to any one of the preceding claims, wherein the dust box (160) comprises a dust box body (161) communicated with the dust discharge opening (150e) of the cyclone unit (150), the dust box body (161) forming a space to collect the dust filtered by the cyclone unit (150), the dust box (160) comprising:
a first region (161a) communicated with the dust discharge opening (150e) of the cyclone unit (150); and
a second region (161b) extending from the first region (161a), the second region (161b) having a smaller sectional area than the first region (161a).

13. The robot cleaner (100) according to any one of the preceding claims, wherein at least a portion of second region (161b) is accommodated between the first guiding member (141) and the second guiding member (142).

14. The robot cleaner (100) of claim 12 or 13, wherein at least a portion of the first region (161a) is disposed on the first guiding member (141) and the second guiding member (142).

15. The robot cleaner (100) of claim 12, 13 or 14, wherein at least parts of the first guiding member (141) and the second guiding member (142) are bent to enclose the second region (161b) at two sides.

## Patentansprüche

1. Roboterreiniger (100), der Folgendes umfasst:
eine Saugeinheit (130), die konfiguriert ist, staubhaltige Luft zu saugen;
eine Wirbelkammereinheit (150), die bei der Saugeinheit (130) vorgesehen ist, wobei die Wirbelkammereinheit (150) eine erste Saugöffnung (150a) und eine zweite Saugöffnung (150b) zum Saugen von Luft und eine erste Wirbelkammer (151) und eine zweite Wirbelkammer (152) zum Durchführen von Luft aufweist;
ein erstes Führungselement (141) und ein zweites Führungselement (142), die sich von der Saugeinheit zu der Wirbelkammereinheit (150) erstrecken, wobei das erste Führungselement (141) für eine Verbindung zwischen der Saugeinheit (130) und der ersten Saugöffnung (150a) dient und das zweite Führungselement (142) für eine Verbindung zwischen der Saugeinheit (130) und der zweiten Saugöffnung (150b) dient; und
einen Staubbehälter (160) in Kommunikation mit einer Staubabführöffhung (150e) der Wirbelkammereinheit (150) zum Sammeln von Staub, der durch die Wirbelkammereinheit (150) gefiltert wird, wobei der Staubbehälter zwischen dem ersten und dem zweiten Führungselement untergebracht ist.

2. Roboterreiniger (100) nach Anspruch 1, der ferner Folgendes umfasst:
eine Gebläseeinheit (170), die mit der Wirbelkammereinheit (150) verbunden ist und konfiguriert ist, staubgefilterte Luft zu einer Außenseite des Roboterreinigers (100) abzuführen, wobei die Gebläseeinheit (170) Folgendes umfasst:
ein erstes Gebläse (171), das konfiguriert ist, staubgefilterte Luft zu saugen und die staubgefilterte Luft zu der Außenseite abzuführen;
ein erstes Gebläse (172), das konfiguriert ist, staubgefilterte Luft zu saugen und die staubgefilterte Luft zu der Außenseite abzuführen;
ein erstes Kommunikationselement (173), das konfiguriert ist, Luft, die in einen Innenraum der ersten Wirbelkammer (151) eingeleitet wird, zu dem ersten Gebläse (171) zu leiten; und
ein zweites Kommunikationselement (174), das konfiguriert ist, Luft, die in einen Innenraum der zweiten Wirbelkammer (152) eingeleitet wird, zu dem zweiten Gebläse (172) zu leiten.

3. Roboterreiniger (100) nach Anspruch 2, der ferner Folgendes umfasst:
eine Antriebseinheit (120), die zwischen dem ersten Gebläse (171) und dem zweiten Gebläse (172) angeordnet ist, wobei die Antriebseinheit (120) konfiguriert ist, durch Antreiben des ersten Gebläses (171) und des zweiten Gebläses (172) eine Saugkraft zu erzeugen.

4. Roboterreiniger (100) nach Anspruch 2 oder 3, wobei die Gebläseeinheit (170) ferner Folgendes umfasst:
einen ersten Feinstaubfilter (173b), der an dem ersten Kommunikationselement (173) angebracht ist und konfiguriert ist, Feinstaub zu filtern; und
einen zweiten Feinstaubfilter (174b), der an dem zweiten Kommunikationselement (174) angebracht ist und konfiguriert ist, Feinstaub zu filtern.

5. Roboterreiniger (100), nach Anspruch 2, 3 oder 4, wobei die Gebläseeinheit (170) ferner Folgendes umfasst:
eine erste Gebläseabdeckung (175), die konfiguriert ist, das erste Gebläse (171) aufzunehmen, wobei die erste Gebläseabdeckung (175) Folgendes umfasst:
einen ersten Lufteinlass (175 a), der in einer Richtung einer drehbaren Welle des ersten Gebläses (171) ausgebildet ist; und
einen ersten Luftauslass (175b), der in einer Richtung des Radius des ersten Gebläses (171) ausgebildet ist; und
eine zweite Gebläseabdeckung (176), die konfiguriert ist, das zweite Gebläse (172) aufzunehmen, wobei die zweite Gebläseabdeckung (176) Folgendes umfasst:
einen zweiten Lufteinlass, der in einer Richtung einer drehbaren Welle des zweiten Gebläses (172) ausgebildet ist; und
einen zweiten Luftauslass, der in einer Richtung des Radius des zweiten Gebläses (172) ausgebildet ist.

6. Roboterreiniger (100) nach Anspruch 5, wobei die erste Gebläseabdeckung (175) ferner eine erste Ausströmführung (175b') umfasst, die sich von einer Innenumfangsfläche der ersten Gebläseabdeckung (175) zu dem ersten Luftauslass (175b) erstreckt, wobei die erste Ausströmführung (175b') eine runde Form aufweist, um ein sanftes Entleeren der staubgefilterten Luft zu leiten.

7. Roboterreiniger (100) nach einem der Ansprüche 2 bis 6, der ferner Folgendes umfasst:
einen ersten Feinstaubfilter (175c), der an dem ersten Luftauslass (175b) angebracht ist; und/oder
einen zweiten Feinstaubfilter, der an dem zweiten Luftauslass angebracht ist.

8. Roboterreiniger (100) nach einem der vorhergehenden Ansprüche, wobei das erste Führungselement (141) und das zweite Führungselement (142) in einem ersten Winkel in Bezug auf die Bodenfläche geneigt sind, und wobei eine Linie, die die Wirbelkammereinheit (150) und die Gebläseeinheit (170) verbindet, in einem zweiten Winkel in Bezug auf die Bodenfläche geneigt ist, wobei der erste Winkel kleiner als der zweite Winkel ist.

9. Roboterreiniger (100) nach einem der vorhergehenden Ansprüche, wobei die Wirbelkammereinheit (150) ferner Folgendes umfasst:
eine erste Saugführung (150a'), die bei der ersten Saugöffnung (150a) zu einer Innenumfangsfläche der Wirbelkammereinheit (150) ausgebildet ist; und
eine zweite Saugführung (150b'), die bei der zweiten Saugöffnung (150b) zu der Innenumfangsfläche der Wirbelkammereinheit (150) ausgebildet ist,
wobei die erste und die zweite Saugführung (150a', 150b') konfiguriert sind, Luft, die jeweils durch die erste und die zweite Saugöffnung (150a, 150b) gesaugt wird, zu der Innenumfangsfläche der Wirbelkammereinheit (150) zu leiten.

10. Roboterreiniger (100) nach einem der vorhergehenden Ansprüche, wobei die Wirbelkammereinheit (150) so an die Gebläseeinheit (170) gekoppelt ist, dass sie von einer unteren Oberfläche des Reinigers (100) beabstandet ist.

11. Roboterreiniger (100) nach einem der vorhergehenden Ansprüche, wobei der Staubbehälter (160) zwischen der Saugeinheit (130) und der Wirbelkammereinheit (150) angeordnet ist.

12. Roboterreiniger (100) nach einem der vorhergehenden Ansprüche, wobei der Staubbehälter (160) einen Staubbehälterkörper (161) umfasst, der mit der Staubabführöffnung (150e) der Wirbelkammereinheit (150) kommuniziert, wobei der Staubbehälter (161) einen Zwischenraum bildet, um den Staub zu sammeln, der durch die Wirbelkammereinheit (150) gefiltert wird, wobei der Staubbehälter (160) Folgendes umfasst:
einen ersten Bereich (161a), der mit der Staubabführöffnung (150e) der Wirbelkammereinheit (150) kommuniziert; und
einen zweiten Bereich (161b), der sich von dem ersten Bereich (161a) erstreckt, wobei der zweite Bereich (161b) eine kleinere Querschnittsfläche als der erste Bereich (161a) aufweist.

13. Roboterreiniger (100) nach einem der vorhergehenden Ansprüche, wobei wenigstens ein Abschnitt des zweiten Bereichs (161b) zwischen dem ersten Führungselement (141) und dem zweiten Führungselement (142) untergebracht ist.

14. Roboterreiniger (100) nach Anspruch 12 oder 13, wobei wenigstens ein Abschnitt des ersten Bereichs (161a) an dem ersten Führungselement (141) und dem zweiten Führungselement (142) angeordnet ist.

15. Roboterreiniger (100) nach Anspruch 12, 13 oder 14, wobei wenigstens Teile des ersten Führungselements (141) und des zweiten Führungselements (142) gebogen sind, um den zweiten Bereich (161b) an zwei Seiten zu umschließen.

## Revendications

1. Nettoyeur robot (100), incluant :
une unité d'aspiration (130) configurée pour aspirer de l'air contenant des poussières ;
une unité à cyclone (150) prévue au niveau de l'unité d'aspiration (130), l'unité à cyclone (150) ayant une première ouverture d'aspiration (150a) et une seconde ouverture d'aspiration (150b) pour aspirer de l'air, et un premier cyclone (151) et un second cyclone (152) pour le passage de l'air à travers ceux-ci ;
un premier élément de guidage (141) et un second élément de guidage (142) s'étendant depuis l'unité d'aspiration vers l'unité à cyclone (150), le premier élément de guidage (141) étant destiné à une connexion entre l'unité d'aspiration (130) et la première ouverture d'aspiration (150a), et le second élément de guidage (142) étant destiné à une connexion entre l'unité d'aspiration (130) et la seconde ouverture d'aspiration (150b) ; et
une boîte à poussières (160) en communication avec une ouverture de décharge de poussières (150e) de l'unité à cyclone (150) pour collecter des poussières filtrées par l'unité à cyclone (150), la boîte à poussières étant logée entre le premier et le second élément de guidage.

2. Nettoyeur robot (100) selon la revendication 1, comprenant en outre :
une unité à ventilateur (170) connecté à l'unité à cyclone (150) et configurée pour décharger de l'air dont les poussières ont été filtrées vers l'extérieur du nettoyeur robot (100), l'unité à ventilateur (170) comprenant :
un premier ventilateur (171) configuré pour aspirer de l'air dont les poussières ont été filtrées et pour décharger l'air dont les poussières ont été filtrées vers l'extérieur ;
un second ventilateur (172) configuré pour aspirer l'air dont les poussières ont été filtrées et pour décharger l'air dont les poussières ont été filtrées vers l'extérieur ;
un premier élément de communication (173) configuré pour guider l'air introduit dans un espace intérieur du premier cyclone (151) vers le premier ventilateur (171) ; et
un second élément de communication (174) configuré pour guider l'air introduit dans un espace intérieur du second cyclone (152) vers le second ventilateur (172).

3. Nettoyeur robot (100) selon la revendication 2, comprenant en outre :
une unité d'entraînement (120) disposée entre le premier ventilateur (171) et le second ventilateur (172), l'unité d'entraînement (120) étant configurée pour générer une force d'aspiration en entraînant le premier ventilateur (171) et le second ventilateur (172).

4. Nettoyeur robot (100) selon la revendication 2 ou 3, dans lequel l'unité à ventilateur (170) comprend en outre :
un premier filtre à poussières fines (173b) monté sur le premier élément de communication (173) et configuré pour filtrer les poussières fines ; et
un second filtre à poussières fines (174b) monté sur le second élément de communication (174) et configuré pour filtrer les poussières fines.

5. Nettoyeur robot (100) selon la revendication 2, 3 ou 4, dans lequel l'unité à ventilateur (170) comprend en outre :
un premier couvercle de ventilateur (175) configuré pour loger le premier ventilateur (171) à l'intérieur, le premier couvercle de ventilateur (175) incluant :
une première entrée d'air (175a) formée dans une direction d'un arbre de rotation du premier ventilateur (171) ; et
une première sortie d'air (175b) formée dans une direction radiale du premier ventilateur (171) ; et
un second couvercle de ventilateur (176) configuré pour loger le second ventilateur (172) à l'intérieur, le second couvercle de ventilateur (176) incluant :
une seconde entrée d'air formée dans une direction d'un arbre de rotation du second ventilateur (172) ; et
une seconde sortie d'air formée dans une direction radiale du second ventilateur (172).

6. Nettoyeur robot (100) selon la revendication 5, dans lequel le premier couvercle de ventilateur (175) inclut en outre un premier guide d'évacuation (175b') s'étendant depuis une surface circonférentielle intérieure du premier couvercle de ventilateur (175) vers la première sortie d'air (175b), le premier guide d'évacuation (175b') ayant une forme arrondie pour guider une évacuation en douceur de l'air dont les poussières ont été filtrées.

7. Nettoyeur robot (100) selon l'une quelconque des revendications 2 à 6, comprenant en outre :
un premier filtre à poussières fines (175c) monté sur la première sortie d'air (175b) ; et/ou
un second filtre à poussières fines monté sur la seconde sortie d'air.

8. Nettoyeur robot (100) selon l'une quelconque des revendications précédentes,
dans lequel le premier élément de guidage (141) et le second élément de guidage (142) sont inclinés à un premier angle par rapport à la surface du sol, et une ligne qui connecte l'unité à cyclone (150) et l'unité à ventilateur (170) est inclinée à un second angle par rapport à la surface du sol, le premier angle étant plus petit que le second angle.

9. Nettoyeur robot (100) selon l'une quelconque des revendications précédentes, dans lequel l'unité à cyclone (150) comprend en outre :
un premier guide d'aspiration (150a') formé à la première ouverture d'aspiration (150a) vers une surface circonférentielle intérieure de l'unité à cyclone (150) ; et
un second guide d'aspiration (150b') formé à la seconde ouverture d'aspiration (150b) vers la surface circonférentielle intérieure de l'unité à cyclone (150),
le premier et le second guide d'aspiration (150a', 150b') étant configurés pour guider l'air aspiré à travers la première et la seconde ouverture d'aspiration (150a, 150b) respectivement, vers la surface circonférentielle intérieure de l'unité à cyclone (150).

10. Nettoyeur robot (100) selon l'une quelconque des revendications précédentes, dans lequel l'unité à cyclone (150) est couplée sur l'unité à ventilateur (170) de manière à être espacée d'une surface au fond du nettoyeur (100).

11. Nettoyeur robot (100) selon l'une quelconque des revendications précédentes, dans lequel la boîte à poussières (160) est agencée entre l'unité d'aspiration (130) et l'unité à cyclone (150).

12. Nettoyeur robot (100) selon l'une quelconque des revendications précédentes, dans lequel la boîte à poussières (160) comprend un corps de boîte à poussières (161) en communication avec l'ouverture d'évacuation de poussières (150e) de l'unité à cyclone (150), le corps de boîte à poussières (161) formant un espace pour collecter des poussières filtrées par l'unité à cyclone (150), la boîte à poussières (160) comprenant :
une première région (161a) en communication avec l'ouverture d'évacuation de poussière (150e) de l'unité à cyclone (150) ; et
une seconde région (161b) s'étendant depuis la première région (161a), la seconde région (161b) ayant une aire de section transversale plus petite que la première région (161a).

13. Nettoyeur robot (100) selon l'une quelconque des revendications précédentes, dans lequel au moins une portion de la seconde région (161b) est logée entre le premier élément de guidage (141) et le second élément de guidage (142).

14. Nettoyeur robot (100) selon la revendication 12 ou 13, dans lequel au moins une portion de la première région (161a) est disposée sur le premier élément de guidage (141) et sur le second élément de guidage (142).

15. Nettoyeur robot (100) selon la revendication 12, 13 ou 14, dans lequel au moins des parties du premier élément de guidage (141) et du second élément de guidage (142) sont cintrées pour enfermer la seconde région (161b) sur deux côtés.
